(19) **Europäisches Patentamt / European Patent Office / Office européen des brevets**

(11) **EP 4 397 565 A1**

(12) # EUROPEAN PATENT APPLICATION
published in accordance with Art. 153(4) EPC

(43) Date of publication:
**10.07.2024 Bulletin 2024/28**

(21) Application number: **22863948.0**

(22) Date of filing: **17.05.2022**

(51) International Patent Classification (IPC):
***B61L 23/00*** (2006.01)   ***B60L 3/00*** (2019.01)
***G01S 17/931*** (2020.01)

(52) Cooperative Patent Classification (CPC):
**B60L 3/00; B61L 23/00; G01S 17/931**

(86) International application number:
**PCT/JP2022/020510**

(87) International publication number:
**WO 2023/032358 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.09.2021 JP 2021143715**

(71) Applicant: **Hitachi, Ltd.**
**Tokyo 100-8280 (JP)**

(72) Inventors:
• **ODA, Atsushi**
**Tokyo 100-8280 (JP)**
• **OOMI, Taishi**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **OBSTACLE DETECTION APPARATUS**

(57)    An object of the present invention is to provide an obstacle detection device that keeps a processing time for detecting an obstacle within a predetermined range without limitation on a detection region. An obstacle detection device (110) for detecting an obstacle by using one or a plurality of external sensors (120) configured to monitor surroundings of a train includes: an object detection unit (111) configured to detect an object from sensor information acquired by the external sensors (120); a detection result selection unit (112) configured to select an object detection result detected by the object detection unit (111); and an obstacle recognition unit (113) configured to determine whether or not an object is an obstacle on the basis of an object detection result selected by the detection result selection unit (112), in which the detection result selection unit (112) selects an object detection result within a range of the number of detections that allows processing of the obstacle recognition unit (113) to be completed within a predetermined target processing time.

FIG. 1

EP 4 397 565 A1

**Description**

Technical Field

The present invention relates to an obstacle detection device, and particularly to an obstacle detection device mounted on a track transport system that travels on a track.

Background Art

In recent years, research has been conducted on automatic driving in existing track transport systems, due to concerns about a shortage of human resources due to aging of drivers and reduction of operation costs. In a track transport system in which a transport vehicle travels, on a track, when there is an obstacle on the track, avoidance by steering cannot be performed. Therefore, it is important to detect the obstacle on the track in order to improve safety and operability of the track transport system. At present, drivers visually detect an obstacle on a track and on a route. Whereas, in order to perform unmanned driving, a mechanism for automatically detecting an obstacle on a route is required, and a method using an external sensor such as a millimeter wave radar, a laser radar, or a camera has been studied. It is common to use different types of sensors for redundancy, and to fuse (sensor fusion) results of individual sensors to detect an object.

PTL 1 discloses a technique for detecting an obstacle by using an external sensor.

Citation List

Patent Literature

PTL 1: JP 2012-230604 A

Summary of Invention

Technical Problem

Processing (sensor fusion processing) of detecting an obstacle by fusing results of a plurality of pieces of external sensor data has a characteristic that a processing time fluctuates in accordance with the number of detection results of the individual external sensors. In order to notify a driver of the obstacle detection result at a constant cycle or output the obstacle detection result to another system, it is necessary to keep the fluctuation in the fusion processing time constant.

In the technique described in PTL 1, a processing load is reduced by limiting a detection region. However, even if the detection region is limited, in a case where there are many detection results of individual external sensors in the detection region, the processing time of the fusion processing may exceed a predetermined time. In addition, by limiting the detection region, there is a possibility that a region to be originally detected is limited, and an obstacle that should be detected is not detected.

In view of the problem described above, an object of the present invention is to provide an obstacle detection device that keeps a processing time for detecting an obstacle within a predetermined range without limitation on a detection region.

Solution to Problem

In order to achieve the object described above, one of representative obstacle detection devices according to the present invention is an obstacle detection device - for detecting an obstacle by using one or a plurality of external sensors configured to monitor surroundings of a train. The obstacle detection device includes: an object detection unit configured to detect an object from sensor information acquired by the external sensors; a detection result selection unit configured to select an object detection result detected by the object detection unit; and an obstacle recognition unit configured to determine whether or not an object is an obstacle on the basis of an object detection result selected by the detection result selection unit, in which the detection result,selection unit selects an object detection result within a range of the number of detections that allows processing of the obstacle recognition unit to be completed within a predetermined target processing time.

Advantageous Effects of Invention

According to the present invention, in the obstacle detection device, a processing time for detecting an obstacle can be kept within a predetermined range without limitation on a detection region. The problems, configurations, and effects other than those described above will be clarified by the description of the embodiments below.

Brief Description of Drawings

[FIG. 1] FIG. 1 is a diagram illustrating a device configuration according to a first embodiment of the present invention.
[FIG. 2] FIG. 2 is a flowchart illustrating processing of a detection result selection unit according to the first embodiment of the present invention.
[FIG. 3] FIG. 3 is a graph illustrating an outline of an example of a weight function according to the first embodiment of the present invention.
[FIG. 4] FIG. 4 is a conceptual view, illustrating details of an example of detection results according to the first embodiment of the present invention.
[FIG. 5] FIG. 5 is a conceptual view illustrating details of an example of a weight function according to the first embodiment of the present invention.
[FIG. 6] FIG. 6 is a graph illustrating an outline of an example of a weight function at a time of watching the vicinity of a stoppable distance according to the first embodiment of the present invention.
[FIG. 7] FIG. 7 is a graph illustrating an outline of an example of a weight function at a time of watching a specific region according to the first embodiment of the present invention.
[FIG. 8] FIG. 8 is a flowchart illustrating processing of a detection result selection unit according to a second embodiment of the present invention.
[FIG. 9] FIG. 9 is a view for explaining an example of an integration method according to the second embodiment of the present invention.
[FIG. 10] FIG. 10 is a flowchart illustrating processing of a detection result selection unit according to a third embodiment of the present invention.
[FIG. 11] FIG. 11 is a view for explaining a virtual distribution method for detection results according to the third embodiment of the present invention.

Description of Embodiments

Hereinafter, embodiments of the present invention will be described with reference to the drawings.

<First Embodiment>

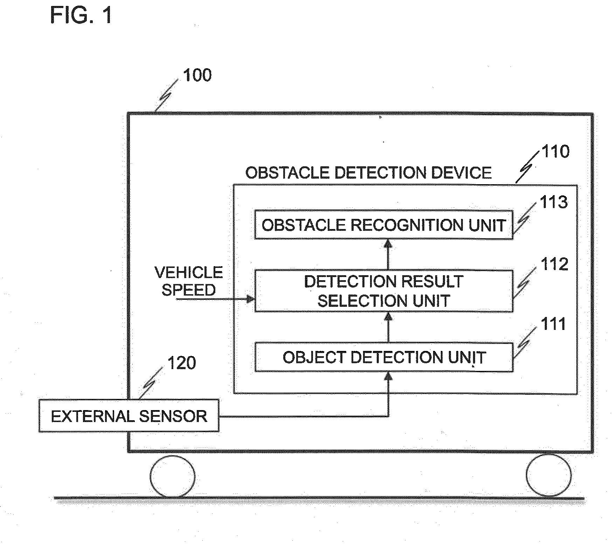

FIG. 1 is a diagram illustrating a device configuration of an obstacle detection device according to a first embodiment. An obstacle detection device 110 is mounted on a train 100 that travels on a track, and has individual functions of an object detection unit 111, a detection result selection unit 112, and an obstacle recognition unit 113. The obstacle detection device 110 includes necessary devices such as a processor to implement these functions. The obstacle detection device 110 is connected to an external sensor 120. In addition, the obstacle detection device 110 is connected to a vehicle information control system (not illustrated), an automatic train driving device (not illustrated), and the like mounted on the train 100.

The external sensor 120 senses a state around the train (particularly, in front of the train 100), and transmits sensing data to the object detection unit 111. Examples of the external sensor 120 include a camera, a laser range finder (LIDAR), and a millimeter wave radar. Examples of the camera include a monocular camera, a stereo camera, and an infrared camera. Each sensor uses a sensor selected from these. A plurality of sensors may be mounted, or a plurality of types of sensors may be mounted. In addition, a plurality of sensors are preferably mounted for redundancy.

The object detection unit 111 grasps a situation in front of the train by using external sensor data from the external sensor 120, and detects an object. Various methods can be applied as the object detection processing by the object detection unit 111 as long as an object can be detected. For example, a technique for detecting an object used in the automobile field can also be used. Specifically, there is a method of creating a parallax image by using a stereo camera and detecting a shape and a position of an object in front from the parallax image. In addition, there are also a method of detecting an object on an image from a monocular image by using a deep neural network (DNN), and a method of detecting an object from point cloud data of LIDAR. At this time, the DNN is one of means used for machine learning, and enables detection of various objects and improvement of object detection accuracy by extracting and learning features of the objects.

The detection result selection unit 112 acquires detection results of all the sensors from the external sensor 120 from the object detection unit 111. The detection result selection unit 112 performs processing of selecting the acquired detection result by using a vehicle speed and a weight function that is an upper limit of the number of detections of detection objects to be adopted for each distance from the train. The number of selected detection results is set to be equal to or less than an upper limit of the number of input objects for ending, within a predetermined time, the fusion processing on the detection results from the object detection unit 111 in the obstacle recognition unit 113. Details of this processing will be described later. The vehicle speed may be acquired from the vehicle information control system (not illustrated) or the automatic train driving device (not illustrated). Furthermore, self-position estimation may be performed using data from the external sensor 120, and the vehicle speed may be estimated by the obstacle detection device 110. Note that, it is sufficient that the vehicle speed can be recognized, and an acquisition method and a calculation method may be performed by a method other than the above. The selected object detection result is transmitted to the obstacle recognition unit 113.

The obstacle recognition unit 113 performs the fusion processing, on the object detection result selected by the detection result selection unit 112. The fusion processing is processing of detecting an obstacle by fusing a plurality of object detection results selected by the detection result selection unit 112, and estimates a size and a position of the detection object with high accuracy. For example, when a detection result of the stereo camera is compared with a detection result of the LIDAR, position accuracy of the detection object is higher in the LIDAR. Therefore, when an object is detected by both the external sensors, the stereo camera and the LIDAR, position information of the LIDAR is adopted as position information of the object.

In the fusion processing in the present embodiment, grouping is performed such that object detection results present at a certain distance from the train become one object. That is, processing is performed in which a plurality of object detection results that are present at a certain distance from the train, acquired by the external sensor 120, and selected by the detection result selection unit 112 are output as one detection result. Here, when the number of object detection results increases, the number of grouping targets increases, and thus the processing time increases (fluctuates). However, since selection is made by the detection result selection unit 112 to make the number of object detection results to be equal to or less than the predetermined value, the processing time can be set within the predetermined range.

Further, the obstacle recognition unit 113 determines whether or not there is an object detection result within a structure gauge, which is a region where the own train is likely to travel, among the object detection results subjected to the fusion processing. Then, the object detection result determined to be within the structure gauge is recognized as an obstacle.

The train 100 determines whether it is possible to stop with respect to the object recognized as the obstacle by the obstacle recognition unit 113 from the current vehicle speed, and determines whether or not to operate the brake. A notification of this determination result is sent to a crew through a human machine interface (HMI) (not illustrated), or a brake operation request is output to a safety device or the like that ensures safety of the train. In addition, various methods can be applied for a format of the obstacle detection result and a method of using the obstacle detection result.

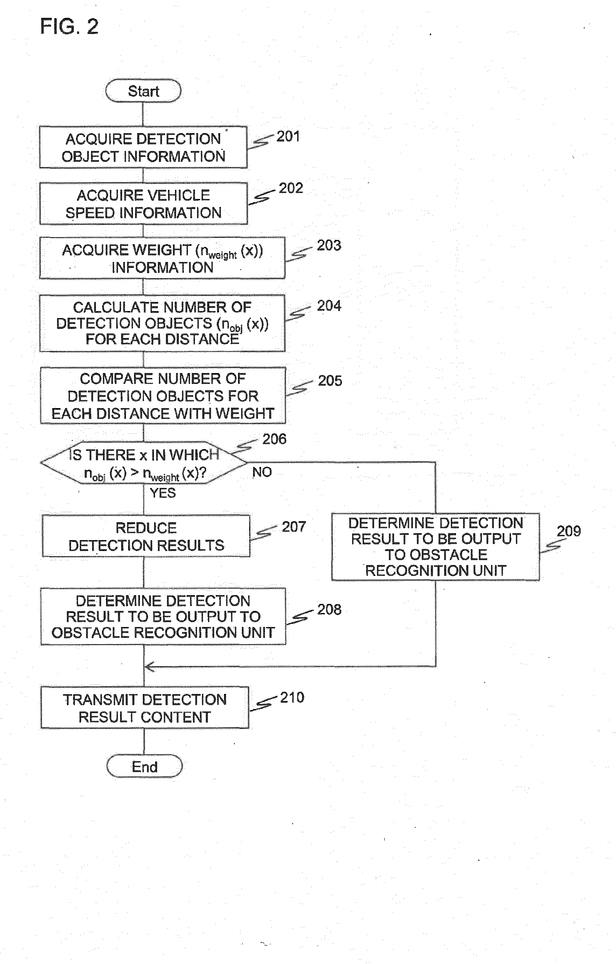

FIG. 2 is a flowchart illustrating processing of the detection result selection unit according to the first embodiment of the present invention. With reference to FIG. 2, processing of the detection result selection unit 112 of the first embodiment will be described.

First, in step 201, the detection result selection unit 112 acquires an object detection result obtained by each sensor of the external sensor 120 from the object detection unit 111. Here, in a case where one object is detected for each sensor, it means that one object is detected. In a case of using a plurality of sensors, an object is individually detected for each sensor, and all the objects are counted. For the objects, information may preferably be held together with a distance x. Next, the processing proceeds to step 202.

In step 202, the detection result selection unit 112 acquires vehicle speed information. The acquisition of the vehicle speed information has been described with reference to FIG. 1. Next, the processing proceeds to step 203.

In step 203, the detection result selection unit 112 calls a weight function $n_{weight}$ (x) . The weight function $n_{weight}$ (x) is a function for determining an upper limit value of the number of detection objects determined for each distance x from the train 100. As the weight function $n_{weight}$ (x), different functions can be set according to the vehicle speed information. Therefore, in step 203, the weight function $n_{weight}$ (x) corresponding to the vehicle speed acquired in step 202 can be acquired. Further, the weight function may be held by the obstacle detection device 110, or a crew may select any weight function. In addition, any weight function may be set remotely from an operation management system on the ground. It is sufficient that the detection result selection unit 112 can recognize a specific weight function, and a place where the information is held can be freely applied. Note that the distance x can be, for example, a distance in a traveling direction from the head of the train 100.

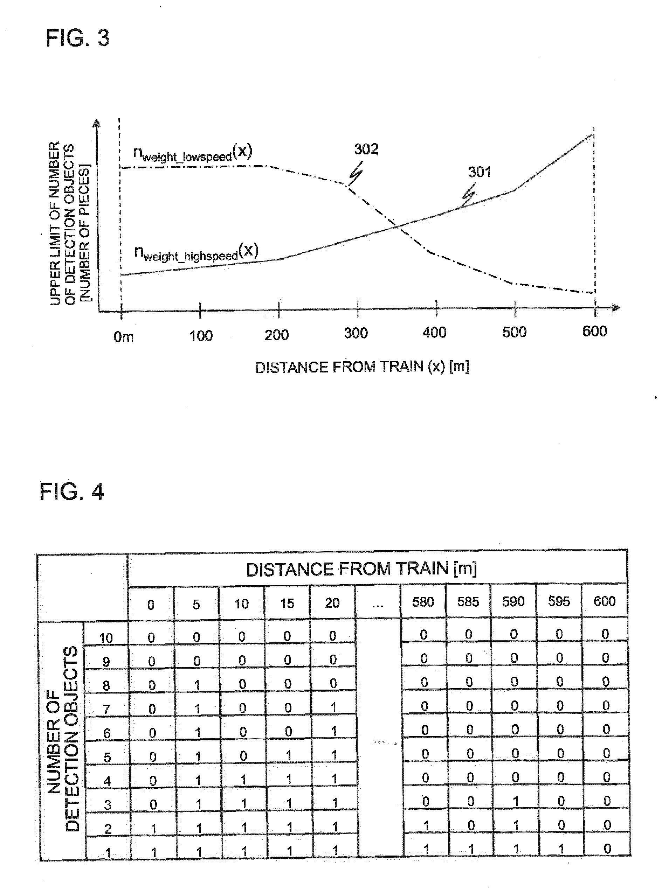

Here, an example of the weight function $n_{weight}$ (x) is illustrated in FIG. 3. The weight function $n_{weight}$ (x) in FIG. 3 is represented by a function of a distance (x) from the train, and an upper limit of the number of detection objects adopted for each distance is illustrated. The weight function is a function that defines which distance x of the object detection result is regarded as important. For example, when the vehicle speed is high, it is necessary to detect a farther object in order to recognize an obstacle at a point where collision can be avoided. Therefore, as the weight function, a weight function $n_{weight\_highspeed}$ (x) 301 that increases a value of a point where the distance from the train is long is applied. Whereas, when the vehicle speed is low, it is important to detect an object in a wide region in the vicinity. Therefore, a weight function $n_{weight\_lowspeed}$ (x) 302 that increases a value in the vicinity of the train is applied as the weight function.

In this manner, the detection result selection unit 112 reads the weight function in accordance with the vehicle speed. The weight function $n_{weight}$ (x) is defined to satisfy Equation (1).

[Formula 1]

$$\sum_{x=0}^{600} n_{weight}(x)\{x = 0,5,10\cdots 595,600\} = Max\_num_{fusion}\cdots(1)$$

Here, Max_num$_{fusion}$ is an upper limit of the number of input detection objects for completing the fusion processing within a predetermined time. That is, by setting a total value of the weight function of the individual distances x to Max_num$_{fusion}$, the number of input detection objects does not exceed the upper limit of the number of input detection objects of the fusion processing, as long as within the weight function.

A resolution of the distance x is for identifying that the detection object is at the same distance for each predetermined range. For example, the resolution is defined as 1 m, 5 m, or the like, in accordance with position recognition accuracy of the detection object obtained by the system. When the resolution is 5 m, detection objects are identified as detection objects at the same distance in a range of every 5 m (for example, between 7.5 m and 12.5 m in a case of 10 m). In the first embodiment, a case of 5 m will be described.

In the next step 204, the detection object information acquired from the object detection unit 111 is classified for each distance (x) from the train 100, and the number of detection objects $n_{obj}$ (x) for each distance x is calculated. Next, the processing proceeds to step 205.

In step 205, the number of detection objects $n_{obj}$ (x) and a value of the weight function $n_{weight}$ (x) are compared for each distance x. Then, a value of x in which the number of detection objects $n_{obj}$ (x) is larger than the weight function $n_{weight}$ (x) is recorded. Next, the processing proceeds to step 206.

In step 206, it is determined whether or not there is a distance x in which the number of detection objects $n_{obj}$ (x) is larger than the weight function $n_{weight}$ (x) as a result of step 205. If there is such a distance x, the processing proceeds to step 207, and if there is no such a distance x, the processing proceeds to step 209.

In step 207, processing is performed in which the object detection result at the distance x in which the number of detection objects $n_{obj}$ (x) is larger than the weight function $n_{weight}$ (x) is reduced.

A specific reduction method will be described.

First, the number of detection objects $n_{obj}$ (x) is counted in order of proximity from a center of the rail in a left-right direction (sleeper direction). Then, arrangement is performed as an array in which "1" is substituted up to the number of detection objects $n_{obj}$ (x) for each ' distance x. That is, "1" is sequentially added from a lower row in a column corresponding to the distance x, and "0" appears in a row above the number of detection objects $n_{obj}$ (x) .

FIG. 4 illustrates an example of a result of substituting the number of detection objects $n_{obj}$ (x) into the array. The example of FIG. 4 indicates that, for example, there have been eight detection objects (eight pieces of "1", from the bottom) at the distance x of 5 m, and there have been three detection objects (three pieces of "1" from the bottom) at the distance x of 590 m. A resulting array $N_{obj}$ illustrated in FIG. 4 is expressed by the following Equation (2) .

[Formula 2]

$$N_{obj} = \begin{bmatrix} 0 & 0 & 0 & & 0 & 0 & 0 \\ 0 & 0 & 0 & \cdots & 0 & 0 & 0 \\ 0 & 1 & 0 & & 0 & 0 & 0 \\ \vdots & \vdots & & \ddots & & \vdots & \\ 0 & 1 & 1 & & 1 & 0 & 0 \\ 1 & 1 & 1 & \cdots & 1 & 0 & 0 \\ 1 & 1 & 1 & & 1 & 1 & 0 \end{bmatrix} \cdots(2)$$

Next, the upper limit value of the number of detection objects represented by the weight function $n_{weight}$ (x) is organized as an array in which "1" is substituted for each distance x. That is, "1" is sequentially added from a lower row in a column corresponding to the distance x, and "0" appears in a row above the weight function $n_{weight}$ (x) .

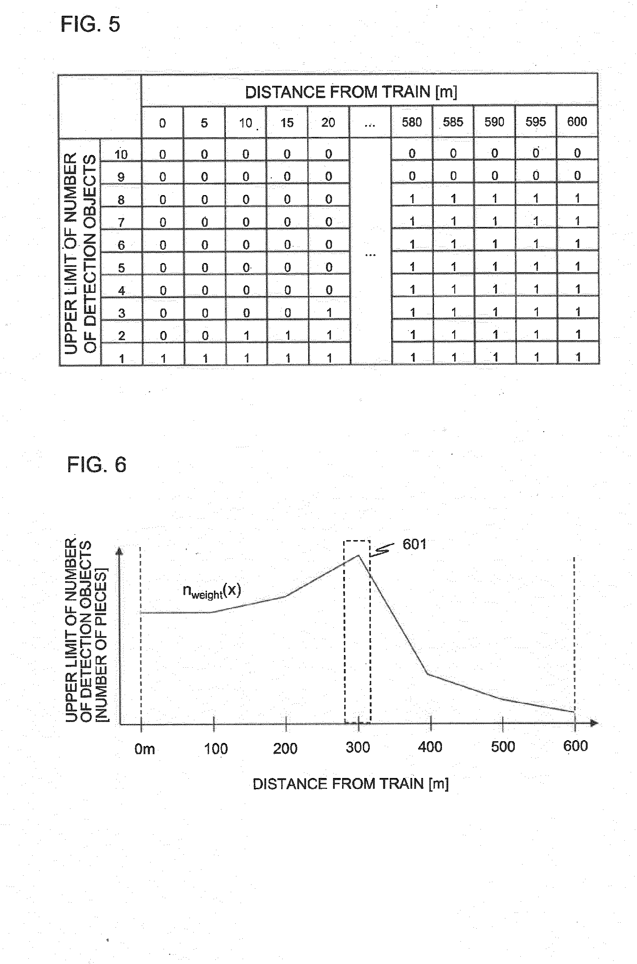

FIG. 5 illustrates an example of a result obtained by substituting the upper limit value of the number of detection objects represented by the weight function $n_{weight}$ (x) into the array. The example of FIG. 5 indicates that, for example, up to three detection objects (three pieces of "1" from the bottom) are allowed at a point where the distance x is 20 m, and up to eight detection objects (eight pieces of "1" from the bottom) are allowed at a point where the distance x is 590 m. A resulting array $N_{weight}$ in FIG. 5 is represented by Equation (3).

[Formula 3]

$$N_{weight} = \begin{bmatrix} 0 & 0 & 0 & & 0 & 0 & 0 \\ 0 & 0 & 0 & \cdots & 0 & 0 & 0 \\ 0 & 0 & 0 & & 1 & 1 & 1 \\ \vdots & & & \ddots & & & \vdots \\ 0 & 0 & 0 & & 1 & 1 & 1 \\ 0 & 0 & 1 & \cdots & 1 & 1 & 1 \\ 1 & 1 & 1 & & 1 & 1 & 1 \end{bmatrix} \cdots (3)$$

Then, the detection result is reduced using Equations (2) and (3) described above. A reduction result of the detection result can be calculated by a logical product of the array $N_{obj}$ and the array $N_{weight}$, and the result is expressed by the following Equation (4).

[Formula 4]

$$N_{result} = N_{obj} {}^{\wedge} N_{weight} = \begin{bmatrix} 0 & 0 & 0 & & 0 & 0 & 0 \\ 0 & 0 & 0 & \cdots & 0 & 0 & 0 \\ 0 & 0 & 0 & & 0 & 0 & 0 \\ \vdots & & & \ddots & & & \vdots \\ 0 & 0 & 0 & & 1 & 0 & 0 \\ 0 & 0 & 1 & \cdots & 1 & 0 & 0 \\ 1 & 1 & 1 & & 1 & 1 & 1 \end{bmatrix} \cdots (4)$$

In this processing, in the same row and column, a combination of "0" and "1" results in "0". Therefore, in a case of "number of detection objects $n_{obj}$ (x) < weight function $n_{weight}$ (x)", the value of the number of detection objects $n_{obj}$ is a calculated value. Whereas, in a case of "number of detection objects $n_{obj}$ (x) > weight function $n_{weight}$ (x)", the value of the weight function $n_{weight}$ (x) is a calculated value. That is, the detection object exceeding the weight function $n_{weight}$ (x) is deleted. As a result, it is possible to perform processing in which the number of detection objects $n_{obj}$ (x) at the distance x does not exceed the upper limit value of the weight function $n_{weight}$ (x). In addition, in the deletion, the detection object far from the center of the rail in the left-right direction is deleted. Therefore, the detection object is left preferentially in order from the center of the rail. This is because the center of the rail is considered to have a high risk of collision of the train 100. Note that other priorities can be applied. Next, the processing proceeds to step 208.

In step 208, up to the number of pieces of "1" of each distance of the $N_{result}$ calculated in step 207, selection is made as the object detection result to be output to the obstacle recognition unit 113 in order of proximity from the rail center. Next, the processing proceeds to step 210.

Whereas, step 209 is a case where there is no distance x in which the number of detection objects $n_{obj}$ (x) is larger than the weight function $n_{weight}$ (x) according to the determination in step 206. This case means that the processing is to be completed within a predetermined processing time even if all the detection results are input to the fusion processing. Therefore, all of the object detection results of the sensors of the external sensors 120 acquired from the object detection unit 111 are selected as detection results to be output to the obstacle recognition unit 113. Next, the processing proceeds to step 210.

In step 210, the selected detection results are transmitted to the obstacle recognition unit 113. The obstacle recognition unit 113 performs the fusion processing on the basis of the selected detection results.

Note that, although the example of the weight function according to high or low of the vehicle speed has been described in step 203 above, other weight functions can also be defined. For example, as illustrated in FIG. 6, a stoppable distance may be calculated from the vehicle speed, a weight function that increases the number of detection objects near a stoppable distance 601 may be defined, and the weight function may be output to the obstacle recognition unit 113. Specifically, as illustrated in FIG. 6, the number of detection objects near 300 m, which is the stoppable distance, is increased most. The stoppable distance can be obtained by a sum of an idle running distance and a braking distance. Since the stoppable distance varies depending on the vehicle speed, a weight function according to the vehicle speed or the stoppable distance obtained from the vehicle speed may be preferably prepared. By doing this way, it is possible to increase the number of detection objects in a region where the obstacle is most desired to be detected.

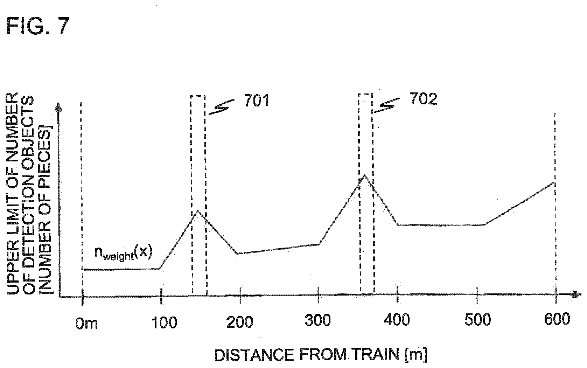

In addition, it is also possible to define to increase a weight function of a specific region desired to be watched, such as a railroad crossing or a platform where there is a high possibility of presence of an obstacle. Here, a region desired to be watched more (hereinafter, a watch region) on a route on which the train 100 travels is held in a database, and a distance from the train 100 to the watch region is calculated from a self position of the train 100 and a position of the watch region read from the database. Then, a weight function that increases the number of detection objects in the watch region is defined. FIG. 7 illustrates a specific example. FIG. 7 illustrates an example in which two railroad crossing regions 701 and 702 are set as the watch regions. Here, a weight function is defined to increase an upper limit of the number of detection objects in portions of the railroad crossing regions 701 and 702 to be larger than those in surrounding regions. In the example of FIG. 7, a value of the weight function at a short distance is set to be small and a value of the weight function at a far distance is set to be large as a whole, but a value of the weight function is set to be higher in the railroad crossing regions 701 and 702 than that in the surrounding regions. By doing this way, it is possible to select a distant object, and also output more detection objects of a railroad crossing having a high risk, to the obstacle recognition unit 113.

According to the first embodiment, the processing time for detecting an obstacle can be kept within a predetermined range without limitation on the obstacle detection region. In addition, depending on a way of defining the weight function, the obstacle recognition unit 113 can freely change a detection object to be a target of the obstacle recognition, and the recognition result of the obstacle can be output as an appropriate result according to the situation.

<Second Embodiment>

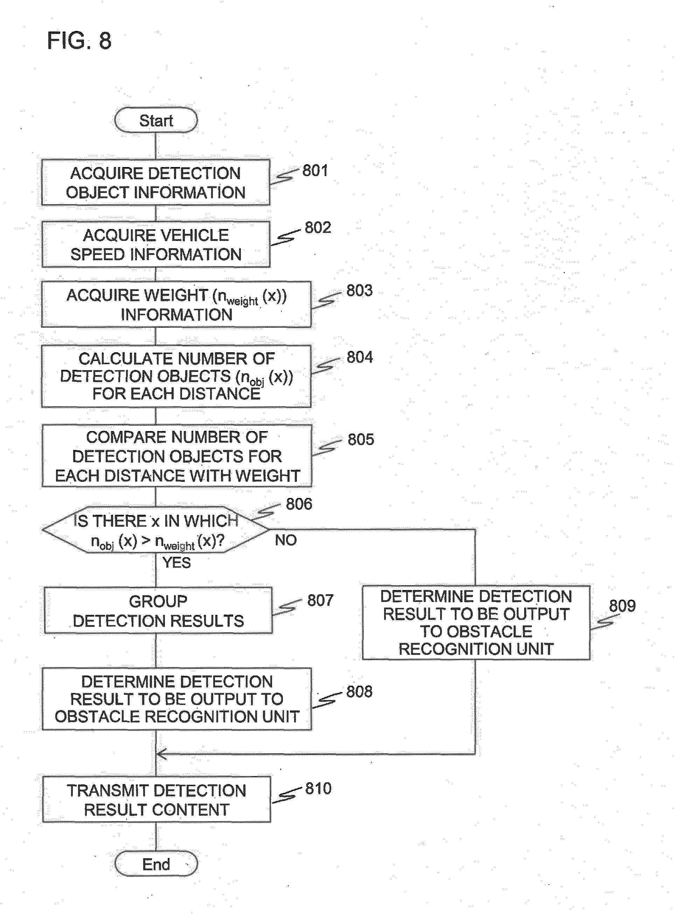

FIG. 8 is a flowchart illustrating processing of a detection result selection unit 112 of an obstacle detection device 110 according to a second embodiment of the present invention. In the second embodiment, differences from the first embodiment will be mainly described, and the same description will be omitted for portions not particularly described.

In the first embodiment, the number of detection objects $n_{obj}$ (x) is compared with the weight function $n_{weight}$ (x) for each distance x, and a detection result of a detection object exceeding the weight function $n_{weight}$ (x) is deleted (discarded). Therefore, the number of detection results output to the obstacle recognition unit 113 can be made smaller than the upper limit $Max\_num_{fusion}$ of the number of detection objects that can be processed within a predetermined time by the fusion processing. Whereas, in the second embodiment, instead of deleting detection objects of the number exceeding the weight function, a method of reducing the number of detection objects by integrating detection results is adopted.

With reference to FIG. 8, processing of the detection result selection unit 112 according to the second embodiment will be described.

First, in step 801, the detection result selection unit 112 acquires an object detection result obtained by each sensor of an external sensor 120 from an object detection unit 111. This is similar to step 201 in FIG. 2 of the first embodiment. Next, the processing proceeds to step 802.

In step 802, the detection result selection unit 112 acquires vehicle speed information. This is similar to step 202 in FIG. 2 of the first embodiment. Next, the processing proceeds to step 803.

In step 803, the detection result selection unit 112 calls a weight function $n_{weight}$ (x), which is an upper limit of the number of object detections adopted for each distance from a train 100 and is defined according to the vehicle speed information. This is similar to step 203 in FIG. 2 of the first embodiment, and a detailed description thereof is omitted. Next, the processing proceeds to step 804.

In the next step 804, the detection object information acquired from the object detection unit 111 is classified for each distance (x) from the train 100, and the number of detection objects $n_{obj}$ (x) for each distance x is calculated. Next, the processing proceeds to step 805.

In step 805, the number of detection objects $n_{obj}$ (x) and the weight function $n_{weight}$ (x) are compared for each distance x. Then, a value of x in which the number of detection objects $n_{obj}$ (x) is larger than the weight function $n_{weight}$ (x) is recorded. Next, the processing proceeds to step 806.

In step 806, it is determined whether or not there is a distance x in which the number of detection objects $n_{obj}$ (x) is larger than the weight function $n_{weight}$ (x) as a result of step 805. If there is such a distance x, the processing proceeds to step 807, and if there is no such a distance x, the processing proceeds to step 809.

In step 807, processing is performed in which the object detection results of the distance x in which the number of detection objects $n_{obj}$ (x) is larger than the weight function $n_{weight}$ (x) are integrated (grouped) . The integration here is performed by a method of integrating the detection objects by using a predetermined priority for the distance x in which the number of detection objects $n_{obj}$ (x) is larger than the weight function $n_{weight}$ (x) .

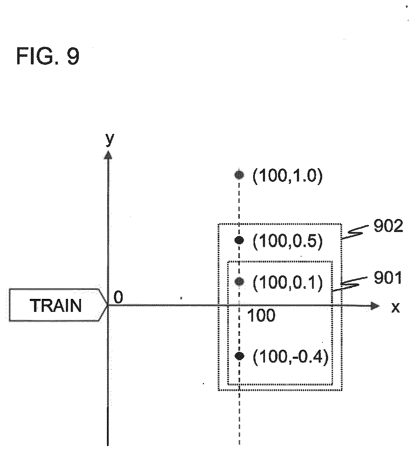

A specific reduction method will be described with reference to FIG. 9. The integration is performed on the detection objects at the distance x, recorded in step 805, in which the number of detection objects $n_{obj}$ (x) is larger than the weight function $n_{weight}$ (x) . First, among the detection objects at the distance x, a detection object whose center position is closest to a center of a rail in the left-right direction is used as a reference. Then, searching is performed for the detection object next closest to the center of the rail in the left-right direction after the detection object closest to the center of the rail in the left-right direction, and these detection objects are integrated to be the same object. As a result, the number of detection objects becomes one from two.

For example, as illustrated in FIG. 9, a case will be described in which there are detection objects at points "0.1"," 0.5", "1.0", and" -0.4" from the rail center (the center of the rail in the left-right direction is y = 0, and the left direction toward the traveling direction is a positive coordinate axis) at the distance x = 100 m. A detection object in the vicinity of the object (100, 0.1) closest to the rail center is searched, and a same object 901 obtained by integrating the object (100, 0.1) with the detection object (100, -0.4) next closest to the rail center. At this time, since the number of detection objects at the distance x = 100 m is reduced by 1, a value of the number of detection objects $n_{obj}$ (100) is reduced by 1.

Here, if the number of detection objects $n_{obj}$ (100) is still larger than the weight function $n_{weight}$ (100), the integration processing is continued. Specifically, a detection object (100, 0.5) next closest to the rail center after the detection object (100, -0.4) is searched, and a same object 902 is obtained by integrating the detection object with the same object 901.

This processing is repeated until the value of the number of detection objects $n_{obj}$ (100) matches the weight function $n_{weight}$ (100) Then, when the value of the number of detection objects $n_{obj}$ (100) matches the weight function $n_{weight}$ (100) at the distance x, the next x in which the number of detection objects $n_{obj}$ (x) is larger than the weight function $n_{weight}$ (x) is searched, and the similar processing is performed. Then, such integration processing is repeated until there is no longer a distance x in which the number of detection objects $n_{obj}$ (x) is larger than the weight function $n_{weight}$ (x) . This makes it possible to make the number of detection objects within the weight function. In addition, the integration can be performed from the center of the rail considered to have a high risk of collision of the train 100. Note that other priorities can be applied. Next, the processing proceeds to step 808.

In step 808, among the object detection results of the sensors of the external sensors 120 acquired from the object detection unit 111, the detection results grouped (integrated) in step 807 are determined as the selected detection results to be output to the obstacle recognition unit 113. Next, the processing proceeds to step 810.

Step 809 is a case where there is no distance x in which the number of detection objects $n_{obj}$ (x) is larger than the weight function $n_{weight}$ (x) according to the determination in step 806. This case means that the processing is to be completed within a predetermined processing time even if all the detection results are input to the fusion processing. Therefore, all of the object detection results of the sensors of the external sensors 120 acquired from the object detection unit 111 are selected as detection results to be output to the obstacle recognition unit 113. Next, the processing proceeds to step 810.

In step 810, the selected detection results are transmitted to the obstacle recognition unit 113. The obstacle recognition unit 113 performs the fusion processing on the basis of the selected detection results.

According to the second embodiment, the processing time for detecting an obstacle can be kept within a predetermined range without limitation on the obstacle detection region. In addition, since the method is not a method of reducing the number of detection objects as in the first embodiment, it is possible to output a detection result based on more detection objects to the obstacle recognition unit 113, which contributes to improvement of a detection rate.

<Third Embodiment>

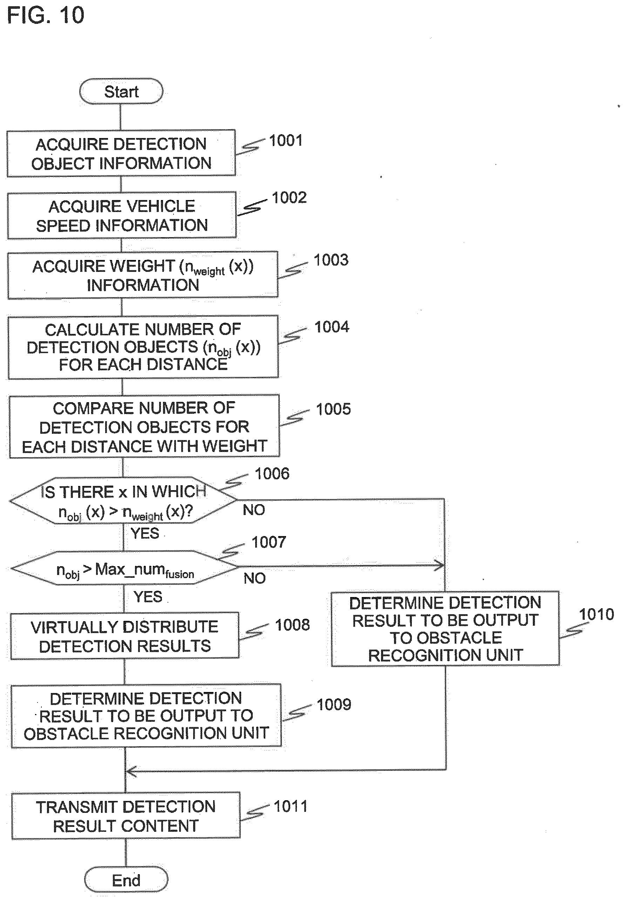

FIG. 10 is a flowchart illustrating processing of a detection result selection unit 112 of an obstacle detection device 110 according to a third embodiment of the present invention. In the third embodiment, differences from the first embodiment will be mainly described, and the same description will be omitted for portions not particularly described.

In the first embodiment, the number of detection objects $n_{obj}$ (x) is compared with the weight function $n_{weight}$ (x) for each distance x, and all detection results of detection objects exceeding the weight function $n_{weight}$ (x) are deleted (discarded). Therefore, the number of detection results output to the obstacle recognition unit 113 can be made smaller than the upper limit $Max\_num_{fusion}$ of the number of detection objects that can be processed within a predetermined time by the fusion processing. However, in a case where the number of detection results is smaller than the upper limit $Max\_num_{fusion}$ of the number of detection objects, there is still room for processing, but processing for that amount is not performed. In the third embodiment, an example will be described in which the number of detection objects is adjusted such that the number of detection objects that can be processed in fusion processing within a predetermined time is equal to the number of detection results output by the detection result selection unit 112 as much as possible.

With reference to FIG. 10, processing of the detection result selection unit 112 according to the third embodiment will be described.

First, in step 1001, the detection result selection unit 112 acquires an object detection result obtained by each sensor of an external sensor 120 from an object detection unit 111. This is similar to step 201 in FIG. 2 of the first embodiment. Next, the processing proceeds to step 1002.

In step 1002, the detection result selection unit 112 acquires vehicle speed information. This is similar to step 202 in FIG. 2 of the first embodiment. Next, the processing proceeds to step 1003.

In step 1003, the detection result selection unit 112 calls a weight function $n_{weight}$ (x), which is an upper limit of the number of object detections adopted for each distance from a train 100 and is defined according to the vehicle speed information. This is similar to step 203 in FIG. 2 of the first embodiment, and a detailed description thereof is omitted. Next, the processing proceeds to step 1004.

In step 1004, the detection object information acquired from the object detection unit 111 is classified for each distance (x) from the train 100, and the number of detection objects $n_{obj}$ (x) for each distance x is calculated. Next, the processing proceeds to step 1005.

In step 1005, the number of detection objects $n_{obj}$ (x) and the weight function $n_{weight}$ (x) are compared for each distance x. Then, a value of x in which the number of detection objects $n_{obj}$ (x) is larger than the weight function $n_{weight}$ (x) is recorded. Next, the processing proceeds to step 1006.

In step 1006, it is determined whether or not there is a distance x in which the number of detection objects $n_{obj}$ (x) is larger than the weight function $n_{weight}$ (x) as a result of step 1005. If there is such a distance x, the processing proceeds to step 1007, and if there is no such a distance x, the processing proceeds to step 1010.

In step 1007, the number of object detection results $n_{obj}$ obtained by individual sensors of the external sensor 120 acquired from the object detection unit 111 is compared with an upper limit $Max\_num_{fusion}$ of the number of input detection objects for completing the fusion processing within a predetermined time. Here, the number of object detection results $n_{obj}$ is a sum of the number of detection objects at all distances x, and a relationship between the number of object detection results $n_{obj}$ and the number of detection objects $n_{obj}$ (x) is expressed by the following Equation (5) .
[Formula 5]

$$n_{obj} = \sum_{x=0}^{600} n_{obj}(x) \{x = 0,5,10 \cdots 595,600\} \cdots (5)$$

Then, when the number of object detection results $n_{obj}$ is larger than the upper limit $Max\_num_{fusion}$ of the number of input detection objects, the processing proceeds to step 1008. When the number of object detection results $n_{obj}$ is equal to or smaller than the upper limit $Max\_num_{fusion}$ of the number of input detection objects, the processing proceeds to step 1010. This case means that the fusion processing is to be completed within a predetermined time even if all the detection results are output for the fusion processing. Therefore, it is not necessary to select the detection result.

In step 1008, the number of object detection results $n_{obj}$ is adjusted so that the number of object detection results $n_{obj}$ falls within the upper limit $Max\_num_{fusion}$ of the number of input detection objects. This adjustment is performed by processing of virtually distributing the object detection result at the distance x where the number of detection objects $n_{obj}$ (x) is larger than the weight function $n_{weight}$ (x) to the distance x where the number of detection objects $n_{obj}$ (x) is smaller than the weight function $n_{weight}$ (x) .

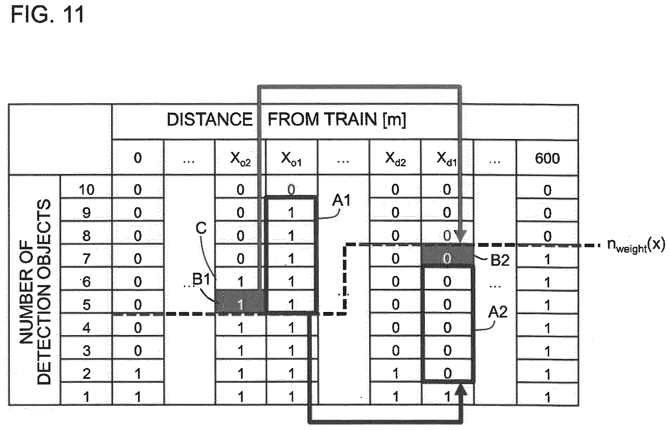

Here, with reference to FIG. 11, a specific example of the virtual distribution method will be described.

First, a largest value (a distance farthest from the train) $x_{o1}$ among the distances x in which the number of detection objects $n_{obj}$ (x) is larger than the weight function $n_{weight}$ (x) is searched. Then, in this $x_{o1}$, virtual distribution is performed for detection objects of an amount exceeding the weight function $n_{weight}$ ($x_{o1}$). As a distribution destination, a largest value (a distance farthest from the train) $x_{d1}$ among the distances x in which the number of detection objects $n_{obj}$ (x) is smaller than the weight function $n_{weight}$ (x) is searched, and distribution is performed thereto. In FIG. 11, a detection object A1 exceeding the weight function $n_{weight}$ ($x_{o1}$) at the distance $x_{o1}$ is allocated to an empty frame of A2 of the distance $x_{d1}$.

As a result of allocating the detection result of the distance $x_{o1}$ to the distance $x_{d1}$, in a case of "number of detection objects $n_{obj}$ ($x_{d1}$) < weight function $n_{weight}$ ($x_{d1}$)" at the distance $x_{d1}$, there is still an empty frame, and thus the following virtual distribution is performed. In FIG. 11, this condition is satisfied because the weight function $n_{weight}$ ($x_{d1}$) has not been reached by an amount of one frame of B2 of the distance $x_{d1}$. In the distribution here, among the distances x in which the number of detection objects $n_{obj}$ (x) is larger than the weight function $n_{weight}$ (x), a value $x_{o2}$ (a distance next farthest from the train) next largest after the (all distributed) distance $x_{o1}$ is searched. Then, in this $x_{o2}$, virtual distribution is performed for detection objects of an amount exceeding the weight function $n_{weight}$ ($x_{o2}$). A distribution destination is an empty frame B2 of the distance $x_{d1}$ where there is still an empty space.

As a result of allocating the detection result of the distance $x_{o2}$ to the distance $x_{d1}$, in a case of "number of detection objects $n_{obj}$ ($x_{d1}$) > weight function $n_{weight}$ ($x_{d1}$)", the following virtual distribution is performed for an amount exceeding the weight function $n_{weight}$ ($x_{d1}$). In FIG. 11, at the distance $x_{o2}$, there are two detection objects B1 and C exceeding the weight function $n_{weight}$ ($x_{o2}$). Here, if allocation is performed to the empty frame B2 of the distance $x_{d1}$, the detection object C exceeds the weight function $n_{weight}$ ($x_{d1}$). Therefore, the following virtual distribution is performed for the detection object C. As a distribution destination, a value $x_{d2}$ (a distance next farthest from the train) next largest after the distance $x_{d1}$ among the distances x in which the number of detection objects $n_{obj}$ (x) is smaller than the weight function $n_{weight}$ (x) is searched, and the detection object C is allocated thereto.

Such processing is repeated, and this processing ends when the number of object detection results $n_{obj}$ becomes equal to the upper limit $Max\_num_{fusion}$ of the number of input detection objects. That is, the processing ends when all the empty frames where the number of detection objects $n_{obj}$ (x) does not reach the weight function $n_{weight}$ (x) have been entirely filled by the virtual distribution. Thereafter, when there is a distance x in which the number of detection objects $n_{obj}$ (x) is larger than the weight function $n_{weight}$ (x), the detection objects exceeding the weight function $n_{weight}$ (x) are deleted for the distance x. That is, the detection objects of an amount that cannot be virtually distributed are deleted. As a result, the number of detection objects $n_{obj}$ can be made the same as the upper limit $Max\_num_{fusion}$ of the number of input detection objects, and the maximum processing within the prescribed range can be performed.

Note that, in the above example, the configuration has been described in which allocation is preferentially performed from a detection result of a distance x having the largest value (a distance far from the train) among the distances x in which the number of detection objects $n_{obj}$ (x) is larger than the weight function $n_{weight}$ (x), but the allocation method is not limited thereto. That is, it is possible to determine the order of performing virtual distribution with a predetermined priority order.

For example, in a case where the weight function $n_{weight\_lowspeed}$ (x) that increases a value in the vicinity of the train in FIG. 3 is adopted, allocation may be preferentially performed from a detection result of a distance x having the smallest value (close to the train) among the distances x in which the number of detection objects $n_{obj}$ (x) is larger than the weight function $n_{weight}$ (x) In addition, in a case where the weight function $n_{weight}$ (x) in FIG. 6 is adopted, allocation may be preferentially performed from a detection result of a distance x near the stoppable distance 601 among the distances x in which the number of detection objects $n_{obj}$ (x) is a larger number than the weight function $n_{weight}$ (x) . In addition, in a case where the weight function $n_{weight}$ (x) in FIG. 7 is adopted, allocation may be preferentially performed from a detection result of a distance x in the vicinity of specific watch regions 701 and 702 among the distances x in which the number of detection objects $n_{obj}$ (x) is larger than the weight function $n_{weight}$ (x) .

That is, while "number of object detection results $n_{obj}$ < upper limit $Max\_num_{fusion}$ of number of input detection objects" is satisfied, it suffices that the object detection results of the distance x in which the number of detection objects $n_{obj}$ (x) is larger than the weight function $n_{weight}$ (x) can be distributed to the distance x in which the number of detection objects $n_{obj}$ (x) is smaller than the weight function $n_{weight}$ (x). Therefore, the order of virtual distribution is not limited to the above.

In the next step 1009, a result of selecting the detection object on the basis of the virtual distribution in step 1007 among the object detection results of the sensors of the external sensors 120 acquired from the object detection unit 111 is determined as the detection result to be output to the obstacle recognition unit 113. Next, the processing proceeds to step 1011.

Step 1010 is a case where there is no x in which the number of detection objects $n_{obj}$ (x) is larger than the weight function $n_{weight}$ (x) or a case where the number of object detection results $n_{obj}$ is equal to or smaller than the upper limit $Max\_num_{fusion}$ of the number of input detection objects, according to the determination in step 1006 or step 1007. This case means that the fusion processing is to be completed within a predetermined time even if all the detection results are output for the fusion processing. Therefore, all of the object detection results of the sensors of the external sensors 120 acquired from the object detection unit 111 are selected as detection results to be output to the obstacle recognition unit 113. Next, the processing proceeds to step 1011.

In step 1011, the selected detection results are transmitted to the obstacle recognition unit 113. The obstacle recognition unit 113 performs the fusion processing on the basis of the selected detection results.

According to the third embodiment, the processing time for detecting an obstacle can be kept within a predetermined range without limitation on the obstacle detection region. In addition, it is possible to output more detection results to the obstacle recognition unit as compared with the first embodiment, which contributes to improvement of the detection rate.

In each of the embodiments described above, an example has been described in which the detection results of the individual sensors of the external sensors 120 are treated equally. However, in addition to this, the detection results to be output for the fusion processing may be selected according to characteristics of the individual sensors. For example, in a detection range of the LIDAR, a detection result of the LIDAR may be distributed more preferentially than a result of the stereo camera. In addition, a result of the stereo camera may be distributed more preferentially than a result detected by a method of detecting an object on an image from a monocular image by using the deep neural network (DNN). By doing this way, a more important detection result is output to the obstacle recognition unit 113, and the detection rate of the obstacle can be improved.

As described above, according to the embodiments, in the obstacle detection device mounted on the track transport system and using the external sensor data, a processing time for detecting an obstacle can be kept within a predetermined range without limitation on a detection region of the obstacle.

Note that the present invention is not limited to the above-described embodiments, but also includes various modifications. For example, the embodiments described above have been illustrated in detail to facilitate description for easy understanding of the present invention, and are not necessarily limited to the embodiments that include all the configurations. Additionally, a part of a configuration of an embodiment may be replaced with a configuration of another embodiment, and a configuration of an embodiment may be added with a configuration of another embodiment. Moreover, a part of a configuration of each embodiment may be deleted, replaced, or added with another configuration.

Reference Signs List

| | |
|---|---|
| 100 | train |
| 110 | obstacle detection device |
| 111 | object detection unit |
| 112 | detection result selection unit |
| 113 | obstacle recognition unit |
| 120 | external sensor |
| 601 | stoppable distance |
| 701, 702 | railroad crossing region |

**Claims**

1. An obstacle detection device for detecting an obstacle by using one or a plurality of external sensors configured to monitor surroundings of a train, the obstacle detection device comprising:

   an object detection unit configured to detect an object from sensor information acquired by the external sensors;
   a detection result selection unit configured to select an object detection result detected by the object detection unit; and
   an obstacle recognition unit configured to determine whether or not an object is an obstacle based on an object detection result selected by the detection result selection unit,
   wherein the detection result selection unit selects an object detection result within a range of a number of detections that allows processing of the obstacle recognition unit to be completed within a predetermined target processing time.

2. The obstacle detection device according to claim 1, wherein the detection result selection unit selects an object detection result by using a weight function that defines an upper limit of a number of object detections for each distance from the train in accordance with vehicle speed information of the train.

3. The obstacle detection device according to claim 2, wherein

   the detection result selection unit uses, when a vehicle speed of the train is high, a weight function that defines a higher upper limit of a number of detections at a far distance from the train than an upper limit in a vicinity of the train, and
   the detection result selection unit uses, when a vehicle speed of the train is low, a weight function that defines a higher upper limit of a number of detections in a vicinity of the train than an upper limit at a far distance from the train.

4. The obstacle detection device according to claim 2, wherein the detection result selection unit uses a weight function that defines a high upper limit of a number of detections in a vicinity of a stoppable distance calculated from a vehicle speed of the train.

5. The obstacle detection device according to claim 2, wherein the detection result selection unit uses a weight function that defines a high upper limit of a number of detections in a vicinity of a watch region set on a route on which the train travels.

6. The obstacle detection device according to claim 2, wherein

the detection result selection unit compares a number of detection objects from the object detection unit with a value of a weight function for each distance from the train, and

the detection result selection unit outputs, as the selected object detection result to the obstacle recognition unit, a detection result obtained by deleting a detection object at each distance so that a number of detection objects becomes equal to or less than a value of a weight function.

7. The obstacle detection device according to claim 6, wherein in deletion of the detection result, a detection object is preferentially left in order from a center of a rail.

8. The obstacle detection device according to claim 2, wherein

the detection result selection unit compares a number of detection objects from the object detection unit with a value of a weight function for each distance from the train, and

the detection result selection unit outputs, as the selected object detection result to the obstacle recognition unit, a detection result obtained by integrating detection objects at individual distances so that a number of detection objects becomes equal to or less than a value of a weight function.

9. The obstacle detection device according to claim 8, wherein in integration of the detection result, detection objects are preferentially integrated in order from a center of a rail.

10. The obstacle detection device according to claim 2, wherein

the detection result selection unit compares a number of detection objects from the object detection unit with a value of a weight function for each distance from the train, and performs virtual distribution on detection results of detection objects of a number exceeding a value of a weight function to each distance in which a number of detection objects is smaller than a value of a weight function so that a number of detection objects becomes equal to or less than a value of a weight function, and

the detection result selection unit outputs, as a selected object detection result to the obstacle recognition unit, a detection result obtained by deleting a detection object of an amount that cannot be virtually distributed.

11. The obstacle detection device according to claim 10, wherein in the virtual distribution, virtual distribution is performed in accordance with a priority that is predetermined, on detection results in a descending order of the priority of a distance from the train.

12. The obstacle detection device according to claim 11, wherein in the virtual distribution, virtual distribution is performed in order from a detection result at a distance from the train in which a value of the weight function is large.

13. The obstacle detection device according to claim 1, wherein when there are a plurality of the external sensors, the detection result selection unit selects, in accordance with a priority that is predetermined, detection results in a descending order of the priority of the external sensors, as an object detection result.

FIG. 1

## FIG. 2

```
                    ┌─────────┐
                    │  Start  │
                    └─────────┘
                         │
         ┌───────────────────────────────┐
         │   ACQUIRE DETECTION           │  ⟵ 201
         │   OBJECT INFORMATION          │
         └───────────────────────────────┘
                         │
         ┌───────────────────────────────┐
         │   ACQUIRE VEHICLE             │  ⟵ 202
         │   SPEED INFORMATION           │
         └───────────────────────────────┘
                         │
         ┌───────────────────────────────┐
         │  ACQUIRE WEIGHT ($n_{weight}(x)$)  │  ⟵ 203
         │       INFORMATION             │
         └───────────────────────────────┘
                         │
         ┌───────────────────────────────┐
         │   CALCULATE NUMBER OF         │  ⟵ 204
         │ DETECTION OBJECTS ($n_{obj}(x)$) │
         │     FOR EACH DISTANCE         │
         └───────────────────────────────┘
                         │
         ┌───────────────────────────────┐
         │   COMPARE NUMBER OF           │  ⟵ 205
         │   DETECTION OBJECTS FOR       │
         │ EACH DISTANCE WITH WEIGHT     │
         └───────────────────────────────┘
                         │
                   ⟋⟍  206
          ⟋  IS THERE x IN WHICH  ⟍
         ⟨  $n_{obj}(x) > n_{weight}(x)$?  ⟩ ── NO ──┐
          ⟍                      ⟋                    │
             ⟍   YES   ⟋                              │
                  │                                    │
   ┌──────────────────────┐         ┌──────────────────────────┐
   │      REDUCE          │ ⟵ 207   │  DETERMINE DETECTION     │ ⟵ 209
   │  DETECTION RESULTS   │         │  RESULT TO BE OUTPUT     │
   └──────────────────────┘         │       TO OBSTACLE        │
              │                     │   RECOGNITION UNIT       │
   ┌──────────────────────┐         └──────────────────────────┘
   │  DETERMINE DETECTION │ ⟵ 208              │
   │  RESULT TO BE OUTPUT TO │                 │
   │ OBSTACLE RECOGNITION UNIT │               │
   └──────────────────────┘                    │
              │◄──────────────────────────────┘
   ┌──────────────────────┐
   │  TRANSMIT DETECTION  │ ⟵ 210
   │   RESULT CONTENT     │
   └──────────────────────┘
              │
        ┌─────────┐
        │   End   │
        └─────────┘
```

# FIG. 3

# FIG. 4

| | | DISTANCE FROM TRAIN [m] | | | | | | | | | | |
|---|---|---|---|---|---|---|---|---|---|---|---|---|
| | | 0 | 5 | 10 | 15 | 20 | ... | 580 | 585 | 590 | 595 | 600 |
| NUMBER OF DETECTION OBJECTS | 10 | 0 | 0 | 0 | 0 | 0 | | 0 | 0 | 0 | 0 | 0 |
| | 9 | 0 | 0 | 0 | 0 | 0 | | 0 | 0 | 0 | 0 | 0 |
| | 8 | 0 | 1 | 0 | 0 | 0 | | 0 | 0 | 0 | 0 | 0 |
| | 7 | 0 | 1 | 0 | 0 | 1 | | 0 | 0 | 0 | 0 | 0 |
| | 6 | 0 | 1 | 0 | 0 | 1 | | 0 | 0 | 0 | 0 | 0 |
| | 5 | 0 | 1 | 0 | 1 | 1 | | 0 | 0 | 0 | 0 | 0 |
| | 4 | 0 | 1 | 1 | 1 | 1 | | 0 | 0 | 0 | 0 | 0 |
| | 3 | 0 | 1 | 1 | 1 | 1 | | 0 | 0 | 1 | 0 | 0 |
| | 2 | 1 | 1 | 1 | 1 | 1 | | 1 | 0 | 1 | 0 | 0 |
| | 1 | 1 | 1 | 1 | 1 | 1 | | 1 | 1 | 1 | 1 | 0 |

## FIG. 5

| | | DISTANCE FROM TRAIN [m] | | | | | | | | | | |
|---|---|---|---|---|---|---|---|---|---|---|---|---|
| | | 0 | 5 | 10 | 15 | 20 | ... | 580 | 585 | 590 | 595 | 600 |
| UPPER LIMIT OF NUMBER OF DETECTION OBJECTS | 10 | 0 | 0 | 0 | 0 | 0 | | 0 | 0 | 0 | 0 | 0 |
| | 9 | 0 | 0 | 0 | 0 | 0 | | 0 | 0 | 0 | 0 | 0 |
| | 8 | 0 | 0 | 0 | 0 | 0 | | 1 | 1 | 1 | 1 | 1 |
| | 7 | 0 | 0 | 0 | 0 | 0 | | 1 | 1 | 1 | 1 | 1 |
| | 6 | 0 | 0 | 0 | 0 | 0 | ... | 1 | 1 | 1 | 1 | 1 |
| | 5 | 0 | 0 | 0 | 0 | 0 | | 1 | 1 | 1 | 1 | 1 |
| | 4 | 0 | 0 | 0 | 0 | 0 | | 1 | 1 | 1 | 1 | 1 |
| | 3 | 0 | 0 | 0 | 0 | 1 | | 1 | 1 | 1 | 1 | 1 |
| | 2 | 0 | 0 | 1 | 1 | 1 | | 1 | 1 | 1 | 1 | 1 |
| | 1 | 1 | 1 | 1 | 1 | 1 | | 1 | 1 | 1 | 1 | 1 |

## FIG. 6

FIG. 7

FIG. 8

```
                    ┌──────────┐
                    │  Start   │
                    └────┬─────┘
                         │
         ┌───────────────────────────┐
         │   ACQUIRE DETECTION       │ ⟵ 801
         │   OBJECT INFORMATION      │
         └───────────────┬───────────┘
                         │
         ┌───────────────────────────┐
         │   ACQUIRE VEHICLE         │ ⟵ 802
         │   SPEED INFORMATION       │
         └───────────────┬───────────┘
                         │
         ┌───────────────────────────┐
         │ ACQUIRE WEIGHT (n_weight(x))│ ⟵ 803
         │   INFORMATION             │
         └───────────────┬───────────┘
                         │
         ┌───────────────────────────┐
         │   CALCULATE NUMBER OF     │ ⟵ 804
         │ DETECTION OBJECTS (n_obj(x))│
         │   FOR EACH DISTANCE       │
         └───────────────┬───────────┘
                         │
         ┌───────────────────────────┐
         │   COMPARE NUMBER OF       │ ⟵ 805
         │   DETECTION OBJECTS FOR   │
         │ EACH DISTANCE WITH WEIGHT │
         └───────────────┬───────────┘
```

ACQUIRE DETECTION OBJECT INFORMATION — 801

ACQUIRE VEHICLE SPEED INFORMATION — 802

ACQUIRE WEIGHT ($n_{weight}(x)$) INFORMATION — 803

CALCULATE NUMBER OF DETECTION OBJECTS ($n_{obj}(x)$) FOR EACH DISTANCE — 804

COMPARE NUMBER OF DETECTION OBJECTS FOR EACH DISTANCE WITH WEIGHT — 805

IS THERE x IN WHICH $n_{obj}(x) > n_{weight}(x)$? — 806

NO → DETERMINE DETECTION RESULT TO BE OUTPUT TO OBSTACLE RECOGNITION UNIT — 809

YES → GROUP DETECTION RESULTS — 807

DETERMINE DETECTION RESULT TO BE OUTPUT TO OBSTACLE RECOGNITION UNIT — 808

TRANSMIT DETECTION RESULT CONTENT — 810

End

FIG. 9

## FIG. 10

```
                    ┌─────────┐
                    │  Start  │
                    └────┬────┘
                         │
         ┌───────────────────────────┐
         │   ACQUIRE DETECTION        │ ⟋ 1001
         │   OBJECT INFORMATION       │
         └─────────────┬─────────────┘
                       │
         ┌───────────────────────────┐
         │     ACQUIRE VEHICLE        │ ⟋ 1002
         │   SPEED INFORMATION        │
         └─────────────┬─────────────┘
                       │
         ┌───────────────────────────┐
         │  ACQUIRE WEIGHT (n_weight(x)) │ ⟋ 1003
         │      INFORMATION           │
         └─────────────┬─────────────┘
                       │
         ┌───────────────────────────┐
         │   CALCULATE NUMBER OF      │ ⟋ 1004
         │ DETECTION OBJECTS (n_obj(x)) │
         │     FOR EACH DISTANCE      │
         └─────────────┬─────────────┘
                       │
         ┌───────────────────────────┐
         │    COMPARE NUMBER OF       │ ⟋ 1005
         │   DETECTION OBJECTS FOR    │
         │ EACH DISTANCE WITH WEIGHT  │
         └─────────────┬─────────────┘
```

- ACQUIRE DETECTION OBJECT INFORMATION — 1001
- ACQUIRE VEHICLE SPEED INFORMATION — 1002
- ACQUIRE WEIGHT ($n_{weight}(x)$) INFORMATION — 1003
- CALCULATE NUMBER OF DETECTION OBJECTS ($n_{obj}(x)$) FOR EACH DISTANCE — 1004
- COMPARE NUMBER OF DETECTION OBJECTS FOR EACH DISTANCE WITH WEIGHT — 1005

1006 — IS THERE x IN WHICH $n_{obj}(x) > n_{weight}(x)$? — NO / YES

1007 — $n_{obj} > Max\_num_{fusion}$ — NO / YES

1008 — VIRTUALLY DISTRIBUTE DETECTION RESULTS

1010 — DETERMINE DETECTION RESULT TO BE OUTPUT TO OBSTACLE RECOGNITION UNIT

1009 — DETERMINE DETECTION RESULT TO BE OUTPUT TO OBSTACLE RECOGNITION UNIT

1011 — TRANSMIT DETECTION RESULT CONTENT

End

FIG. 11

| | | DISTANCE | FROM TRAIN [m] | | | | | | |
|---|---|---|---|---|---|---|---|---|---|
| | | 0 | ... | $X_{o2}$ | $X_{o1}$ | ... | $X_{d2}$ | $X_{d1}$ | ... | 600 |
| NUMBER OF DETECTION OBJECTS | 10 | 0 | | 0 | 0 | | 0 | 0 | | 0 |
| | 9 | 0 | | 0 | 1 | A1 | 0 | 0 | | 0 |
| | 8 | 0 | C | 0 | 1 | | 0 | 0 | B2 | 0 |
| | 7 | 0 | | 0 | 1 | | 0 | 0 | | 1 |
| | 6 | 0 | B1 | 1 | 1 | | 0 | 0 | ... | 1 |
| | 5 | 0 | | 1 | 1 | | 0 | 0 | A2 | 1 |
| | 4 | 0 | | 1 | 1 | | 0 | 0 | | 1 |
| | 3 | 0 | | 1 | 1 | | 0 | 0 | | 1 |
| | 2 | 1 | | 1 | 1 | | 1 | 0 | | 1 |
| | 1 | 1 | | 1 | 1 | | 1 | 1 | | 1 |

$n_{weight}(x)$

# EP 4 397 565 A1

| | | | |
|---|---|---|---|
| **INTERNATIONAL SEARCH REPORT** | | International application No. | |
| | | **PCT/JP2022/020510** | |

**A. CLASSIFICATION OF SUBJECT MATTER**

*B61L 23/00*(2006.01)i; *B60L 3/00*(2019.01)i; *G01S 17/931*(2020.01)i
FI:  B61L23/00 A; B60L3/00 N; G01S17/931

According to International Patent Classification (IPC) or to both national classification and IPC

**B. FIELDS SEARCHED**

Minimum documentation searched (classification system followed by classification symbols)

B61L23/00; B60L3/00; G01S17/931:G08G1/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2020-159692 A (TOYOTA MOTOR CORP) 01 October 2020 (2020-10-01) paragraphs [0004]-[0073], fig. 1-6 | 1-2, 5-7, 10-13 |
| A | | 3-4, 8-9 |
| Y | JP 2020-205694 A (HITACHI LTD) 24 December 2020 (2020-12-24) paragraphs [0016]-[0112], fig. 1-5 | 1-2, 5-7, 10-13 |
| Y | JP 2002-225656 A (NISSAN MOTOR CO LTD) 14 August 2002 (2002-08-14) paragraphs [0020]-[0085], fig. 1-2 | 2, 5-7, 10-12 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 July 2022** | **19 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/020510**

| Patent document cited in search report | | | Publication date (day/month/year) | Patent family member(s) | Publication date (day/month/year) |
|---|---|---|---|---|---|
| JP | 2020-159692 | A | 01 October 2020 | (Family: none) | |
| JP | 2020-205694 | A | 24 December 2020 | WO 2020/255530 A1 paragraphs [0016]-[0112], fig. 1-5 | |
| JP | 2002-225656 | A | 14 August 2002 | (Family: none) | |

Form PCT/ISA/210 (patent family annex) (January 2015)

**EP 4 397 565 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012230604 A